(19) 

**Europäisches Patentamt**
**European Patent Office**
**Office européen des brevets**

(11) **EP 3 220 294 A1**

(12) **EUROPEAN PATENT APPLICATION**
published in accordance with Art. 153(4) EPC

(43) Date of publication:
**20.09.2017 Bulletin 2017/38**

(21) Application number: **14905776.2**

(22) Date of filing: **14.11.2014**

(51) Int Cl.:
***G06F 17/50*** *(2006.01)*

(86) International application number:
**PCT/JP2014/080135**

(87) International publication number:
**WO 2016/075799 (19.05.2016 Gazette 2016/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Tokyo 100-8280 (JP)**

(72) Inventors:
• **NAKANO Tomohito**
  **Tokyo 100-8280 (JP)**
• **MIYATA Kenji**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **CALCULATION OF ELECTROMAGNETIC FORCE DISTRIBUTION, AND DEVICE FOR CALCULATING ELECTROMAGNETIC FORCE DISTRIBUTION**

(57)　The present invention provides a method for calculating an electromagnetic force distribution with high accuracy. Electromagnetic force acting on an element is calculated by surface integral of force acting on each of the element interfaces. Moreover, an influence caused by a mesh is reduced by using an outward unit normal vector of each of the element interfaces, not using a shape function that is affected by the mesh.

## FIG. 1B

AIR

MAGNETIC SUBSTANCE

ELECTROMAGNETIC FORCE ACTING ON ELEMENT INTERFACE

**Description**

FIELD OF THE INVENTION

The present invention relates to calculation of an electromagnetic force distribution and a device for calculating an electromagnetic force distribution in connection with electromagnetic force analysis.

BACKGROUND OF THE INVENTION

In design and development of electrical machinery and equipment such as a motor, higher efficiency, miniaturization, and noise reduction are desired strongly. In order to satisfy these requirements, a highly accurate electromagnetic field analysis is indispensable. Magnetic materials, such as an electromagnetic steal sheet used for iron cores of electrical machinery and equipment, etc. changes their magnetic properties under the influence of an electromagnetic force. For this reason, it is required to calculate accurately an electromagnetic force distribution that occurs in the electrical machinery and equipment in order to achieve the highly accurate electromagnetic field analysis.
As a method for calculating the electromagnetic force distribution, the nodal force method disclosed in the non-patent document as below is widely used. This method finds force Fi acting on a node by performing volume integral of a product of a stress tensor T and a gradient of a shape function $N_i$ of the node in each element.

DOCUMENT LIST

NON-PATENT DOCUMENT

"Electromagnetic Force Calculation by Nodal Force Method" Akihisa Kameari, Institute of Electrical Engineers of Japan, Material of joint workshop of stationary devices and rotary machines, SA-93-11/RM-93-49(1993)

PROBLEM TO BE SOLVED

An equation of the above-mentioned nodal force method is

(Equation 1)

$$F_i = -\int_V T \nabla N_i dV$$
.

Here, $F_i$ is force acting on a node i on a mesh, T is a Maxwell stress tensor, and $N_i$ is a shape function of the node i.
Since the shape function $N_i$ differs depending on a shape of the mesh, Fi is also affected by the shape of the mesh. Therefore, if a quality of the mesh deteriorates in a region where the electromagnetic force distribution is calculated, it will exert a negative effect on calculation accuracy of the electromagnetic force. Especially, mesh near a surface of a magnetic substance largely affects the calculation accuracy of the electromagnetic force.

SUMMARY OF THE INVENTION

SOLUTION TO PROBLEM

To solve the above-mentioned problem, a method for calculating an electromagnetic force distribution according to the present invention is a method for calculating an electromagnetic force distribution using an analysis result obtained by an electromagnetic field analysis, comprising inputting number of integration points for performing surface integral on element interfaces, and calculating electromagnetic force acting on elements by surface integral of force acting on the element interfaces.
Moreover, to solve the above-mentioned problem, a device for calculating an electromagnetic force distribution according to the present invention is a device for calculating an electromagnetic force distribution using an analysis result obtained by an electromagnetic field analysis, comprising an arithmetic processor configured to input number of integration points for performing surface integral on element interfaces and calculate electromagnetic force acting on elements by surface integral of force acting on the element interfaces.

ADVANTAGEOUS EFFECTS OF THE INVENTION

The electromagnetic force distribution calculated by using the present invention is less influenced by the mesh than the electromagnetic force distribution calculated by the nodal force method and is more highly accurate.

BRIEF DESCRIPTION OF THE DRAWINGS

Fig. 1A shows a definition of an electromagnetic force distribution in the nodal force method;
Fig. 1B shows a definition of an electromagnetic force distribution in the present invention;
Fig. 2 shows an example of a calculation system for carrying out the present invention; and
Fig. 3 is a diagram showing a process in the first embodiment.

DESCRIPTION OF EMBODIMENTS

Hereinafter, embodiments of the present invention are described using the drawings etc. Description in the following shows concrete examples of contents of the present invention. The present invention is not limited to the description and can be modified and revised variously by a person skilled in the art within the scope of the technical idea disclosed in this specification. Moreover, the same reference characters are given to components having the same function in all the figures for describing the present invention, and the repeated explanation may be omitted for the components.

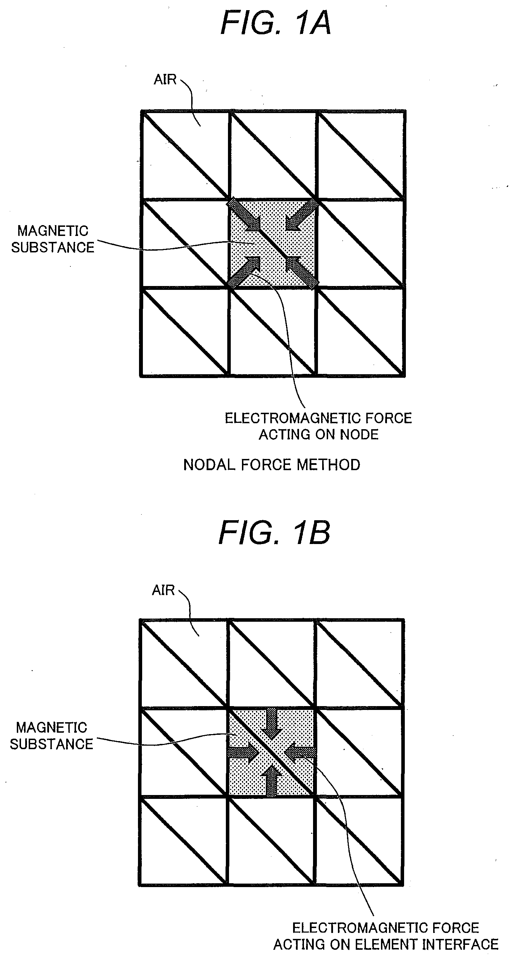

First, a principle of the embodiments is described. The principle of the embodiments is a technique of calculating electromagnetic force distribution using an analysis result obtained by an electromagnetic field analysis, calculating the electromagnetic force acting on elements by surface integral of force acting on each of the element interfaces. Moreover, as shown in Fig. 1B, an outward unit normal vector of each of the element interfaces is used, a shape function that is affected by the mesh not being used, to reduce an influence caused by the mesh. A calculation equation of the electromagnetic force distribution in the embodiments is

$$\text{(Equation 2)}$$

$$F_e = \sum_k \int_{S_{ek}} TndS$$

.

Here, $F_e$ is electromagnetic force acting on an element e, $S_{ek}$ is a k-th interface of the element e, T is a Maxwell stress tensor, and n is an outward unit normal vector on a small area dS. Force acting on each element is found in the present invention, whereas an equivalent nodal force is found in the nodal force method.

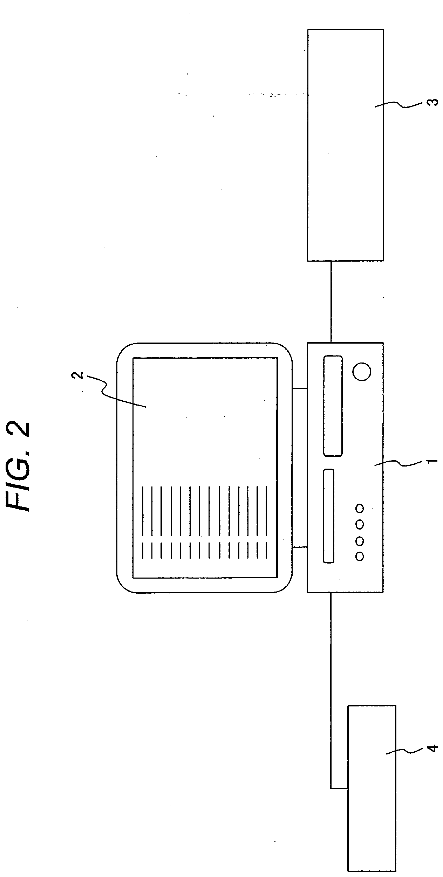

Fig. 2 shows an example of a calculation system that achieves an electromagnetic force calculation method in the embodiments. This analysis system includes a computer 1, a display 2, a storage 3, and an input device 4. The storage 3 is shown explicitly outside the computer 1 in Fig. 1, although the storage 3 may be installed inside the computer 1.

It is assumed that the computer 1 stores an electromagnetic force calculation program in which a series of processes of the electromagnetic force calculation method in the embodiments is coded. This electromagnetic force calculation program can be recorded in a recording medium that a computer can read. The computer 1 can store the electromagnetic force calculation program through a computer-readable recording medium in which the electromagnetic force calculation program is stored. The input device 4 is a keyboard or a mouse, for example, and is used for inputting input data necessary for the analysis into the computer 1, specifying read and write of a data file in which the input data is saved, and executing the calculation.

After input of the input data, the computer 1 executes arithmetic processing, such as reading the input data and calculating the electromagnetic force, according to the stored electromagnetic force calculation program. A calculation result is displayed on the display 2 and is stored in the storage 3 as a data file. A part of the obtained calculation result may be displayed or stored.

FIRST EMBODIMENT

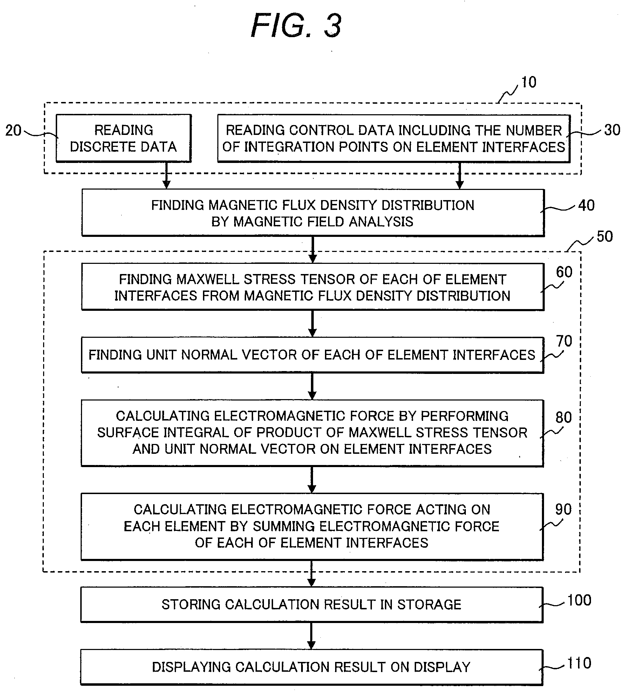

With reference to Fig. 3, the first embodiment of a method for calculating electromagnetic force according to the present invention is described. Fig. 3 shows an analysis process that uses the electromagnetic force calculation method according to this embodiment. This analysis process includes a reading process 10 of reading the input data, a process 40 of finding a magnetic flux density distribution by the magnetic field analysis, a calculation process 50 of calculating the electromagnetic force, a process 100 of storing the calculation result in the storage, and a process 110 of displaying the calculation result on the display. Each process is described below.

<Processes 10, 20, and 30>

In the reading 10 of reading the input data, the computer 1 reads the input data. The reading 10 of reading the input data includes reading 20 of reading discrete data (mesh data) of an object to be analyzed (a product of electrical machinery and equipment, such as a rotary machine and a transformer) for solving a differential equation numerically, and reading 30 of reading control data for controlling an analysis process. In the reading 20 and the reading 30, the computer 1 reads data stored in data file. In the reading 30 of reading control data, the number of integration points is read for performing the surface integral on the element interfaces. Incidentally, although data is first read in this embodiment, necessary data may be read at the time of start of each analysis process.

Incidentally, in the reading 30 of reading control data, although the control data is read from data file and inputted into the computer, the control data may be inputted by a user through a GUI (graphical user interface) etc. of the computer.

<Process 40>

In the process 40 of finding a magnetic flux density distribution by the magnetic field analysis, the magnetic field analysis is carried out based on the discrete data and the control data that were read in the process 20 and process 30 to obtain the magnetic flux density distribution.

<Process 50>

The calculation process 50 of calculating the electromagnetic force distribution includes a process 60 of finding the Maxwell stress tensor of each of the element interfaces, a process 70 of finding the outward unit normal vector of each of the element interfaces, a process 80 of calculating electromagnetic force by performing the surface integral of a product of the Maxwell stress tensor and the outward unit normal vector on the element interfaces, and a process 90 of calculating force acting on each element by summing the electromagnetic force of each of the element interfaces. The calculation process 50 is executed by the computer.

<Processes 60, 70, 80, and 90>

In the process 60, the Maxwell stress tensor defined on each of the element interfaces is calculated by using the magnetic flux density distribution obtained in the process 40. In the process 70, the outward unit normal vector defined on each of the element interfaces is calculated. In the process 80, the surface integral of the Maxwell stress tensor and the outward unit normal vector that were calculated in the processes 60 and 70 is calculated. This value is the electromagnetic force acting on each of the element interfaces. In the process 90, the electromagnetic force acting on each element is calculated by summing the electromagnetic force acting on the element interfaces that were obtained in the process 80.

<Process 100, 110>

The obtained electromagnetic force distribution is stored in the storage by execution of the storing process 100 of storing the calculation result. Moreover, the analysis result is displayed on the display by execution of the display process 110 of displaying the calculation result.

SECOND EMBODIMENT

As a second embodiment, an embodiment of the process 80 is shown where the surface integral of the Maxwell stress tensor and the outward unit normal vector is calculated in the first embodiment.
The surface integral of Equation 2 requires special handling when the stress tensor is discontinuous on the element interfaces, such as on a surface of a magnetic substance. Modification of Equation 2 leads to Equation 3 as

(Equation 3)

$$F_e = \frac{1}{2} \sum_{k(in)} \int_{S_{ek}} \left( T_{out} + T_{in} \right) n dS + \sum_{k(out)} \int_{S_{ek}} T_{out} n dS$$

Here, $T_{in}$ is a stress tensor calculated from the electromagnetic field inside the element, $T_{out}$ is a stress tensor calculated from the electromagnetic field of adjoining elements, k(in) is the element interfaces inside the magnetic substance, and k(out) is the element interfaces on the surface of the magnetic substance. For the element interfaces inside the magnetic substance, an average of the stress tensors on both sides of the interface is integrated by the surface integral. For the element interfaces on the surface of the magnetic substance, the stress tensor defined in an air region outside the magnetic substance is integrated by the surface integral. According to this embodiment, since the shape function depending on a shape of the mesh is not used in Equation 3, an effect is obtained that the calculation is less influenced by the shape of the mesh and is performed with higher accuracy.

THIRD EMBODIMENT

As a third embodiment, another embodiment is shown for the process 50 of calculating the electromagnetic force distribution in the first embodiment. In this embodiment, only the electromagnetic force acting on the surface of the magnetic substance is calculated using the following Equation 4 by the surface integral, and the electromagnetic force acting inside the magnetic substance is calculated, for example, using the following Equation 5 by the volume integral;

(Equation 4)

$$F_{S_{ek}} = \int_{S_{ek}} \left( T_{out} - T_{in} \right) n dS$$

(Equation 5)

$$F_e = \int_{V_e} \left( J \times B - \frac{1}{2} H^2 \nabla \mu \right) dV$$

Here, J is an eddy current density, H is magnetic field intensity, and B is a magnetic flux density. Since the electromagnetic force concentrates on a surface of the magnetic substance, even when the volume integral is employed for the calculation of the electromagnetic force acting inside the magnetic substance, calculation accuracy is hardly affected.

EXPLANATION OF REFERENCE CHARACTERS

1: computer,
2: display,
3: storage, and
4: input device.

**Claims**

**1.** A method for calculating an electromagnetic force distribution using an analysis result obtained by an electromagnetic field analysis, comprising:

inputting number of integration points for performing surface integral on element interfaces; and
calculating electromagnetic force acting on elements by surface integral of force acting on the element interfaces.

2. The method for calculating an electromagnetic force distribution according to claim 1,
wherein a vector Tn is subjected to the surface integral on all the interfaces of each of the elements inside a magnetic substance, the vector Tn including a stress tensor T defined on each of the element interfaces and an outward unit normal vector n defined on each of the element interfaces.

3. The method for calculating an electromagnetic force distribution according to claim 1,
wherein the electromagnetic force distribution is calculated by performing the surface integral of a vector Tn including a stress tensor T defined on a surface of a magnetic substance and an outward unit normal vector n defined on a surface of a magnetic substance, and
wherein the electromagnetic force distribution is calculated inside the magnetic substance by a different method.

4. The method for calculating an electromagnetic force distribution according to claim 2 or 3,
wherein the stress tensor is a Maxwell stress tensor.

5. A device for calculating an electromagnetic force distribution using an analysis result obtained by an electromagnetic field analysis, comprising:

an arithmetic processor configured to input number of integration points for performing surface integral on element interfaces and calculate electromagnetic force acting on elements by surface integral of force acting on the element interfaces.

6. The device for calculating an electromagnetic force distribution according to claim 5,
wherein the arithmetic processor performs the surface integral of a vector Tn on all the interfaces of each of the elements inside a magnetic substance, the vector Tn including a stress tensor T defined on each of the element interfaces and an outward unit normal vector n defined on each of the element interfaces.

7. The device for calculating an electromagnetic force distribution according to claim 5,
wherein the arithmetic processor calculates the electromagnetic force distribution by performing the surface integral of a vector Tn including a stress tensor T defined on a surface of a magnetic substance and an outward unit normal vector n defined on a surface of a magnetic substance, and calculates the electromagnetic force distribution inside the magnetic substance by a different method.

8. The device for calculating an electromagnetic force distribution according to claim 6 or 7,
wherein the stress tensor is a Maxwell stress tensor.

9. The device for calculating an electromagnetic force distribution according to any one of claims 5 to 8, comprising:

a recording medium for recording a calculation result of the arithmetic processor; and
a display processor for displaying the calculation result recorded in the recording medium.

## FIG. 1A

AIR

MAGNETIC
SUBSTANCE

ELECTROMAGNETIC FORCE
ACTING ON NODE

NODAL FORCE METHOD

## FIG. 1B

AIR

MAGNETIC
SUBSTANCE

ELECTROMAGNETIC FORCE
ACTING ON ELEMENT INTERFACE

## FIG. 2

# FIG. 3

```
                                                              ⟋ 10
┌─────────────────────────────────────────────────────────────────────┐
│  ┌──────────────────┐  ┌──────────────────────────────────────────┐  │
│  │    READING       │  │ READING CONTROL DATA INCLUDING THE NUMBER │  │⟋ 30
│  │  DISCRETE DATA   │  │ OF INTEGRATION POINTS ON ELEMENT INTERFACES│  │
│  └──────────────────┘  └──────────────────────────────────────────┘  │
└─────────────────────────────────────────────────────────────────────┘
```

20 (READING DISCRETE DATA)

```
┌────────────────────────────────────────────────────────────┐
│           FINDING MAGNETIC FLUX DENSITY DISTRIBUTION         │  ⟋ 40
│                  BY MAGNETIC FIELD ANALYSIS                   │
└────────────────────────────────────────────────────────────┘
```

⟋ 50

```
┌────────────────────────────────────────────────────────────┐
│  ┌──────────────────────────────────────────────────────┐   │
│  │     FINDING MAXWELL STRESS TENSOR OF EACH OF ELEMENT   │   │ 60
│  │   INTERFACES FROM MAGNETIC FLUX DENSITY DISTRIBUTION   │   │
│  └──────────────────────────────────────────────────────┘   │
│                                                              │
│  ┌──────────────────────────────────────────────────────┐   │
│  │  FINDING UNIT NORMAL VECTOR OF EACH OF ELEMENT INTERFACES │ 70
│  └──────────────────────────────────────────────────────┘   │
│                                                              │
│  ┌──────────────────────────────────────────────────────┐   │
│  │     CALCULATING ELECTROMAGNETIC FORCE BY PERFORMING    │   │ 80
│  │ SURFACE INTEGRAL OF PRODUCT OF MAXWELL STRESS TENSOR   │   │
│  │       AND UNIT NORMAL VECTOR ON ELEMENT INTERFACES     │   │
│  └──────────────────────────────────────────────────────┘   │
│                                                              │
│  ┌──────────────────────────────────────────────────────┐   │
│  │     CALCULATING ELECTROMAGNETIC FORCE ACTING ON        │   │ 90
│  │  EACH ELEMENT BY SUMMING ELECTROMAGNETIC FORCE         │   │
│  │         OF EACH OF ELEMENT INTERFACES                  │   │
│  └──────────────────────────────────────────────────────┘   │
└────────────────────────────────────────────────────────────┘
```

```
┌────────────────────────────────────────────────────────────┐
│           STORING CALCULATION RESULT IN STORAGE             │  ⟋ 100
└────────────────────────────────────────────────────────────┘
```

```
┌────────────────────────────────────────────────────────────┐
│          DISPLAYING CALCULATION RESULT ON DISPLAY           │  ⟋ 110
└────────────────────────────────────────────────────────────┘
```

## INTERNATIONAL SEARCH REPORT

| | International application No. |
|---|---|
| | PCT/JP2014/080135 |

**A.  CLASSIFICATION OF SUBJECT MATTER**
*G06F17/50(2006.01)i*

According to International Patent Classification (IPC) or to both national classification and IPC

**B.  FIELDS SEARCHED**

Minimum documentation searched (classification system followed by classification symbols)
G06F17/50, G06F19/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | Keisanki Programming Kadai 2, 30 April 2010 (30.04.2010), pages 1 to 9, [retrieved on 16 January 2015 (16.01.2015)], Retrieved from the Internet: <URL: http://eecs.angelbell.jp/index. php?%B7%D7%BB%BB%B5%A1%A5%D7%A5%ED%A5%B0%A5%E9% A5%DF%A5%F3%A5%B0%B1%E9%BD%AC%AD%B6%A1%CA%B7%B6 %BA%C0%B4%DD%A1%CB> | 1,5,9<br>2-4,6-8 |
| Y<br>A | Jikaikei Yugen Yosoho o Mochiita Saitekika [POD edition], Morikita Shuppan Co., Ltd., 25 February 2011 (25.02.2011), pages 70 to 77 | 2-4,6-8<br>1,5,9 |

☐ Further documents are listed in the continuation of Box C.        ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 January 2015 (16.01.15) | 27 January 2015 (27.01.15) |

| Name and mailing address of the ISA/ | Authorized officer |
|---|---|
| Japan Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Material of joint workshop of stationary devices and rotary machines, SA-93-11/RM-93-49. **AKIHISA KAMEARI.** Electromagnetic Force Calculation by Nodal Force Method. Institute of Electrical Engineers of Japan, 1993